# EUROPEAN PATENT SPECIFICATION

(11) **EP 0 431 227 B1**
(45) Date of publication and mention of the grant of the patent: **02.03.1994**
(21) Application number: 89313563.2
(22) Date of filing: 22.12.1989
(51) Int. Cl.: F16J 15/08

(54) **A steel laminate gasket**
Stahllaminatdichtung
Joint d'étanchéité en acier laminé

(30) Priority: 20.11.1989 US 439664
(43) Date of publication of application: 12.06.1991
(73) Proprietor: ISHIKAWA GASKET CO. LTD., Tokyo (JP)
(72) Inventor: Udagawa, Tsunekazu, Ichikawa-shi (JP)
(74) Representative: SERJEANTS

(56) References cited:
- US-A- 4 807 892
- US-A- 4 826 708

## Description

### Background of the Invention and Related Art Statement

The present invention relates to a steel laminate gasket for an internal combustion engine to securely seal around cylinder holes and through holes.

An internal combustion engine is provided with a plurality of cylinder holes and other holes, such as holes for bolt, water, oil and push rod. When an engine is actuated, high pressure and high temperature are applied to the cylinder holes due to combustion of a fuel, while relatively low pressure and low temperature are applied to the other holes.

In order to properly seal between two engine blocks of an engine, a gasket is situated between the two engine blocks, such as a cylinder head and a cylinder block, and is tightened so that areas around the cylinder holes as well as the other holes are securely sealed. However, since the sealing conditions around the cylinder holes and other holes are different as explained above, it is not easy to securely seal around all the holes.

It has been known that beads are formed around the cylinder holes and other holes to securely seal around the holes. However, in case the beads are simply formed, sealing can not be perfectly made. Namely, while an engine is actuated, leakage may happen around the cylinder holes and other holes.

In some cases, seal rings may be separately attached around holes for water and oil. However, since the seal rings are separately prepared and installed in the gasket, it requires additional cost. Therefore, this method is not practical.

United States Patent No. US-A-4807892 discloses a steel laminate gasket for an internal combustion engine, including first and second plates bearing beads for sealing around a cylinder hole. A third plate situated between the first and second plates includes a hole large enough to surround the said beads on the first and second plates.

Accordingly, an object of the present invention is to provide a steel laminate gasket which can seal properly around all kinds of holes in an engine.

Another object of the present invention is to provide a steel laminate gasket as stated above, which can be manufactured easily and economically.

Further objects and advantages of the present invention will be apparent from the following description of the invention.

### Summary of the Invention

The present invention provides a steel laminate gasket for an internal combustion engine having at least one cylinder hole (Hc) and at least one through hole (Hw) therein, said gasket comprising a first plate, a second plate situated under the first plate and at least one third plate situated between the first and second plates;
said first and second plates each having at least one hole corresponding to the cylinder hole (Hc), said first, second and third plates each having at least one hole corresponding to the through hole (Hw);
said gasket further including first sealing means formed on at least one of the first and second plates to seal around the cylinder hole (Hc) of the engine and second sealing means formed on at least one of the first, second and third plates to seal around the through hole (Hw); and
said third plate including at least one hole having a diameter larger than the diameter of the first sealing means so that the first sealing means is situated inside the hole of the third plate when the gasket is assembled;
said gasket being CHARACTERIZED IN THAT:
said third plate includes sealing layers formed on both sides of the third plate;
said first sealing means includes a first bead formed on the first plate adjacent to, and surrounding, the hole corresponding to the cylinder hole (Hc) and a second bead formed on the second plate adjacent to, and surrounding, the hole corresponding to the cylinder hole (Hc), said second bead and the first bead facing and abutting one another; and
said second sealing means includes at least one bead formed on at least one of the first, second and third plates around the hole corresponding to the through hole (Hw).

In an alternative embodiment of gasket according to the present invention, a first bead does not face and abut the second bead. Instead, the first sealing means further includes a curved portion formed on the second plate to define the hole corresponding to the cylinder hole and a flange formed on the second plate to extend from the curved portion away from the cylinder hole, said flange overlapping the first plate and the second bead. In this alternative embodiment, a first bead is preferably formed on the first plate between the second bead and the curved portion of the second plate to surround the hole corresponding to the cylinder hole.

The sealing layers formed on both sides of the third plate may be made of soft materials to prevent fluid from passing between the plates. Since the third plate is not exposed to high temperature from the cylinder hole, the sealing layers may be made of soft materials which are not strong against heat but effective to fluid.

Preferably, one third plate is situated between the first and second plates. However, if necessary, two or more third plates may be installed between the first and second plates.

The second sealing means may be a bead formed on the third plate around the through hole of the engine.
Alternatively, the first and second plates may be provided with beads around the through hole of the engine.

### Brief Description of the Drawings

Fig.1 is a partial plan view of a first embodiment of a steel laminate gasket of the present invention;
Fig.2 is an enlarged section view taken along a line 2-2 in Fig.1; and
Figs. 3 and 4 are enlarged section views, similar to Fig.2, of second and third embodiments of a steel laminate gasket of the invention.

The various embodiments of the drawings illustrate features of the invention that are relevant alone or in combination.

### Detailed Description of Preferred Embodiments

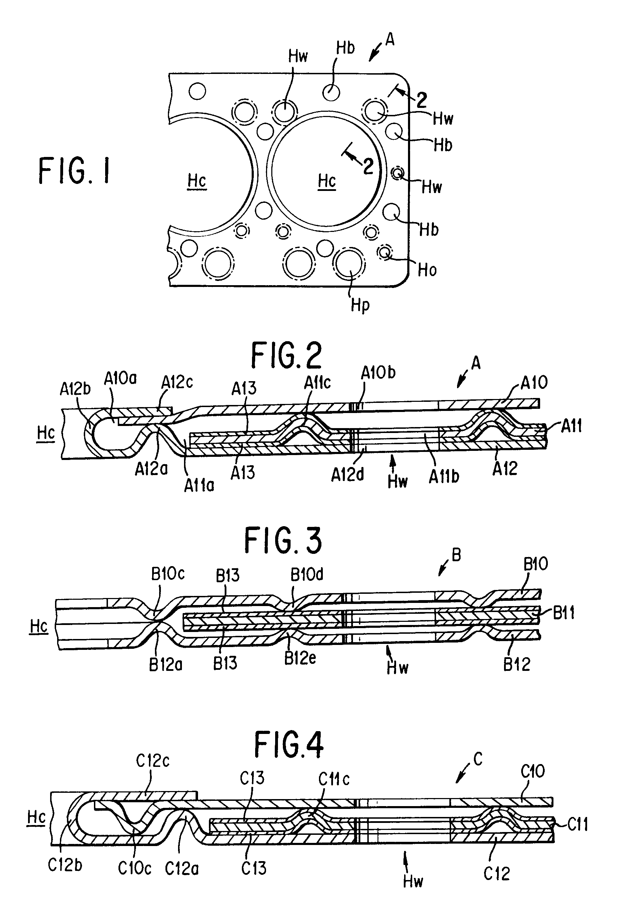

Referring to Figs. 1 and 2, a first embodiment A of a steel laminate gasket of the invention is shown. The gasket A is provided with cylinder holes Hc, bolt holes Hb, water holes Hw, oil holes Ho and push rod holes Hp, as in the conventional gasket. The areas around the water holes Hw, oil holes Ho and push rod holes Hp are sealed in the same manner. For convenience, the cross section of the water hole Hw and cylinder hole Hc is shown in Fig. 2.

As shown in Fig. 2, the gasket A comprises an upper plate A10, a lower plate A12 and a middle plate A11 situated between the upper and lower plates A10, A12. The upper plate A10 is provided with a hole A10a for the cylinder hole Hc, and a hole A10b for the water hole Hw.

The lower plate A12 is provided with a bead A12a around the cylinder hole Hc, a curved portion A12b to define the cylinder hole Hc, and a flange A12c. The flange A12c is located above the bead A12a and a periphery of the hole A10a of the upper plate A10. Also, a hole A12d for the water hole Hw is formed in the lower plate A12.

The middle plate A11 is provided with a hole A11a and a hole A11b for the water hole Hw. The diameter of the hole A11a is larger than the diameter of the bead A12a. Therefore, when the gasket is assembled together, the bead A12a is located inside the hole A11a.

Also, the middle plate A11 is provided with a bead A11c around the hole A11b, and upper and lower coatings A13 covering the entire surfaces thereof. The bead A11c seals around the water hole Hw when the gasket is tightened. The coatings A13 are made of a soft material to provide resiliency. Gum, such as NBR gum, silicone gum and fluorine gum, is preferred. The thickness of the coating A13 is 5-100 micra, preferably 10-50 micra.

When the gasket is situated between two engine blocks (not shown) and is tightened, the bead A12a and curved portion A12b provide sealing pressure around the cylinder hole Hc, while the bead A11c provides sealing pressure around the water hole Hw. The gasket A can properly seal around the cylinder hole Hc and water hole Hw.

It is important in the present invention that the coating is made of a soft material, because the soft material seals properly between the plates to thereby prevent leakage of fluid from the water hole Hw. It is also important that the middle plate A11 does not extend to an area adjacent the cylinder hole Hc, because if the middle plate A11 extends to an area adjacent the cylinder hole Hc, the middle plate A11 is exposed to high temperature, which causes creep relaxation of the soft material formed on the middle plate A11. As a result, leakage may happen around the water hole Hw.

Namely, an effective coating material around the water hole Hw has a low heat resistance. Therefore, such a coating material can not be applied onto a plate for sealing around the cylinder hole Hc. Accordingly, a middle plate which does not extend to an area adjacent the cylinder hole Hc is used, and a coating material effective to fluid is applied onto the middle plate.

Generally, small scratches are formed on outer surfaces of an engine block when manufacturing the engine block. In order to fill up the small scratches, coating which are strong against heat may be formed on outer surfaces of the gasket. Therefore, in the present invention, thin coatings may be formed on the outer surfaces of the upper and lower plates A10, A12 which contact the engine blocks.

Fig. 3 shows a second embodiment B of a steel laminate gasket of the invention. The gasket B comprises an upper plate B10, a lower plate B12 and a middle plate B11 between the upper and lower plates B10, B12. The middle plate B11 includes coatings B13 on outer surfaces thereof, which are the same as the coatings A13.

The upper plate B10 is provided with a bead B10c around the cylinder hole Hc and a bead B10d around the water hole Hw, while the lower plate B12 is provided with a bead B12a around the cylinder hole Hc and a bead B12e around the water hole Hw. When the gasket B is assembled, the beads B10c, B12a directly abut against each other, and the beads B10d, B12e face against each other with the middle plate B11 being interposed therebetween.

In the gasket B, the beads B10c, B12a seal around the cylinder hole Hc, and the beads B10d, B12e seal around the water hole Hw. The gasket B can provide strong sealing pressure around the cylinder hole Hc and water hole Hw.

Fig. 4 shows a third embodiment C of a steel laminate gasket of the invention. The gasket C comprises an upper plate C10, a middle plate C11 with a bead C11c and coatings C13, and a lower plate C12 with a bead C12a, curved portion C12b and flange C12c, similar to the gasket A. However, in the gasket C, the upper plate C10 is further provided with a bead C10c extending toward the lower plate C12, which is located between the bead C12a and curved portion C12b.

In the gasket C, therefore, the area around the cylinder hole Hc is sealed by the beads C10c, C12a and the curved portion C12b. When the gasket C is tightened, wide and strong sealing pressure is obtained around the cylinder hole Hc. The other structure and advantages of the gasket C is the same as the gasket A.

In accordance with the present invention, the middle plate is not located in areas where high temperature is applied, and the coating material which has a low heat resistance but effective to seal around fluid holes is coated onto the middle plate. Therefore, areas around the fluid holes can be effectively sealed by even a single bead.

When the sealing pressure around the cylinder holes Hc is to be changed, the thickness of the middle plate may be changed, or the quality of the plate having a bead around the cylinder hole Hc may be changed as well. Also, when the sealing pressure around the fluid holes is to be changed, the thickness or quality of the plate having a bead for sealing around the fluid hole may be changed.

## Claims

1. A steel laminate gasket for an internal combustion engine having at least one cylinder hole (Hc) and at least one through hole (Hw) therein, said gasket comprising a first plate (10), a second plate (12) situated under the first plate and at least one third plate (11) situated between the first and second plates;
said first and second plates (10,12) each having at least one hole (10a) corresponding to the cylinder hole (Hc), said first, second and third plates (10,12,11) each having at least one hole (10b,12d,11b) corresponding to the through hole (Hw);
said gasket further including first sealing means formed on at least one of the first and second plates to seal around the cylinder hole (Hc) of the engine and second sealing means formed on at least one of the first, second and third plates to seal around the through hole (Hw); and
said third plate (11) including at least one hole (11a) having a diameter larger than the diameter of the first sealing means so that the first sealing means is situated inside the hole (11a) of the third plate when the gasket is assembled;
said gasket being CHARACTERIZED IN THAT:
said third plate (11) includes sealing layers (13) formed on both sides of the third plate;
said first sealing means includes a first bead (10c) formed on the first plate (10) adjacent to, and surrounding, the hole (10a) corresponding to the cylinder hole (Hc) and a second bead (12a) formed on the second plate (12) adjacent to, and surrounding, the hole corresponding to the cylinder hole (Hc), said second bead (12a) and the first bead (10c) facing and abutting one another; and
said second sealing means includes at least one bead (10d,12e,11c) formed on at least one of the first second and third plates (10,12,11) around the hole (10b,12d,11b) corresponding to the through hole (Hw).

2. A steel laminate gasket for an internal combustion engine having at least one cylinder hole (Hc) and at least one through hole (Hw) therein, said gasket comprising a first plate (10), a second plate (12) situated under the first plate and at least one third plate (11) situated between the first and second plates;
said first and second plates (10,12) each having at least one hole (10a) corresponding to the cylinder hole (Hc), said first, second and third plates (10,12,11) each having at least one hole (10b,12d,11b) corresponding to the through hole (Hw);
said gasket further including first sealing means formed on at least one of the first and second plates to seal around the cylinder hole (Hc) of the engine and second sealing means formed on at least one of the first, second and third plates to seal around the through hole (Hw); and
said third plate (11) including at least one hole (11a) having a diameter larger than the diameter of the first sealing means so that the first sealing means is situated inside the hole (11a) of the third plate when the gasket is assembled;
said gasket being CHARACTERISED IN THAT
said third plate (11) includes sealing layers (13) formed on both sides of the third plate;
said first sealing means includes a second bead (12a) formed on the second plate (12) adjacent to, and surrounding, the hole corresponding to the cylinder hole (Hc), a curved portion (12b) formed on the second plate (12) to define the hole corresponding to the cylinder hole (Hc) and a flange (12c) formed on the second plate (12) to extend from the curved portion (12b) away from the cylinder hole (Hc), said flange (12c) overlapping the first plate (10) and the second bead (12a); and
said second sealing means includes at least one bead (10d,12e,11c) formed on at least one of the first, second and third plates (10,12,11) around the hole (10b,12d,11b) corresponding to the through hole (Hw).

3. A steel laminate gasket according to claim 2, wherein the first sealing means further includes a first bead (10c) formed on the first plate (10) between the second bead (12a) and the curved portion (12b) of the second plate (12) to surround the hole (10a).

4. A steel laminate gasket according to any preceding claim, wherein said sealing layers (13) formed on the third plate (11) are made of soft materials to prevent fluid from passing between the plates.

5. A steel laminate gasket according to any preceding claim, wherein the second sealing means includes a third bead (11c) formed on the third plate (11) to surround the through hole (Hw) of the engine.

6. A steel laminate gasket according to any preceding claim, wherein the second sealing means includes a fourth bead (10d) formed on the first plate (10) around the hole (10b) corresponding to the through hole (Hw) and a fifth bead (12e) formed on the second plate (12) around the hole (12d) corresponding to the through hole (Hw), the fourth and fifth beads each extending towards the third plate (11).

## Patentansprüche

1. Stahllaminatdichtung für einen Verbrennungsmotor mit mindestens einer Zylinderbohrung (Hc) und mindestens einer Durchgangsbohrung (Hw) hierin, wobei die genannte Dichtung ein erstes Blech (10), ein zweites Blech (12), das unter dem ersten Blech angeordnet ist, und mindestens ein drittes Blech (11) aufweist, das zwischen dem ersten und zweiten Blech angeordnet ist;
wobei das genannte erste und zweite Blech (10, 12) jeweils mindestens eine Bohrung (10a) aufweist, die der Zylinderbohrnung (Hc) entspricht, und das erste, zweite und dritte Blech (10, 12, 11) jeweils mindestens eine Bohrung (10b, 12d, 11b) aufweist, die der Durchgangsbohrung (Hw) entspricht;
wobei die genannte Dichtung ferner eine erste Abdichteinrichtung aufweist, die an mindestens einem des ersten und zweiten Blechs ausgebildet ist, um rund um die Zylinderbohrung (Hc) des Motors abzudichten, sowie eine zweite Abdichteinrichtung, die an mindestens einem des ersten, zweiten und dritten Blechs ausgebildet ist, um rund um die Durchgangsbohrung (Hw) abzudichten; und
wobei das genannte dritte Blech (11) mindestens eine Bohrung (11a) aufweist, mit einem Durchmesser, der größer ist als der Durchmesser der ersten Abdichteinrichtung, so daß die erste Abdichteinrichtung im Inneren der Bohrung (11a) des dritten Blechs angeordnet ist, wenn die Dichtung zusammenmontiert ist;
wobei die genannte Dichtung DADURCH GEKENNZEICHNET IST, DASS:
das genannte dritte Blech (11) abdichtende Schichten (13) umfaßt, die auf beiden Seiten des dritten Blechs ausgebildet sind;
die genannte erste Abdichteinrichtung eine erste Sicke (10c) umfaßt, die am ersten Blech (10) nahe der Bohrung (10a) und rund um diese ausgebildet ist, die der Zylinderbohrung (Hc) entspricht, sowie eine zweite Sicke (12a), die am zweiten Blech (12) nahe der Bohrung und rund um diese ausgebildet ist, die der Zylinderbohrung (Hc) entspricht, wobei die genannte zweite Sicke (12a) und die erste Sicke (10c) einander zugewandt sind und aneinander anliegen; und
die genannte zweite Abdichteinrichtung mindestens eine Sicke (10d, 12e, 11c) umfaßt, die mindestens an einem des ersten, zweiten und dritten Blechs (10, 12, 11) rund um die Bohrung (10b, 12d, 11b) ausgebildet ist, die der Durchgangsbohrung (Hw) entspricht.

2. Stahllaminatdichtung für einen Verbrennungsmotor mit mindestens einer Zylinderbohrung (Hc) und mindestens einer Durchgangsbohrung (Hw) hierin, wobei die genannte Dichtung ein erstes Blech (10), ein zweites Blech (12), das unter dem ersten Blech angeordnet ist, und mindestens ein drittes Blech (11) aufweist, das zwischen dem ersten und zweiten Blech angeordnet ist;
wobei das genannte erste und zweite Blech (10, 12) jeweils mindestens eine Bohrung (10a) aufweist, die der Zylinderbohrnung (Hc) entspricht, und das erste, zweite und dritte Blech (10, 12, 11) jeweils mindestens eine Bohrung (10b, 12d, 11b) aufweist, die der Durchgangsbohrung (Hw) entspricht;
wobei die genannte Dichtung ferner eine erste Abdichteinrichtung aufweist, die an mindestens einem des ersten und zweiten Blechs ausgebildet ist, um rund um die Zylinderbohrung (Hc) des Motors abzudichten, sowie eine zweite Abdichteinrichtung, die an mindestens einem des ersten, zweiten und dritten Blechs ausgebildet ist, um rund um die Durchgangsbohrung (Hw) abzudichten; und
wobei das genannte dritte Blech (11) mindestens eine Bohrung (11a) aufweist, mit einem Durchmesser, der größer ist als der Durchmesser der ersten Abdichteinrichtung, so daß die erste Abdichteinrichtung im Inneren der Bohrung (11a) des dritten Blechs angeordnet ist, wenn die Dichtung zusammenmontiert ist;
wobei die genannte Dichtung DADURCH GEKENNZEICHNET IST, DASS:
das genannte dritte Blech (11) abdichtende Schichten (13) umfaßt, die auf beiden Seiten des dritten Blechs ausgebildet sind;
die genannte erste Abdichteinrichtung eine zweite Sicke (12a) umfaßt, die am zweiten Blech (12) nahe der Bohrung und rund um diese ausgebildet ist, die der Zylinderbohrung (Hc) entspricht, einen gekrümmten Abschnitt (12b), der am zweiten Blech (12) ausgebildet ist, um die Bohrung zu bestimmen, die der Zylinderbohrung (Hc) entspricht, und einen Flansch (12c), der am zweiten Blech (12) so ausgebildet ist, daß er sich vom gekrümmten Abschnitt (12b) aus von der Zylinderbohrung (Hc) weg erstreckt, wobei der genannte Flansch (12c) das erste Blech (10) und die zweite Sicke (12a) überdeckt; und
die genannte zweite Abdichteinrichtung mindestens eine Sicke (10d, 12e, 11c) umfaßt, die mindestens an einem des ersten, zweiten und dritten Blechs (10, 12, 11) rund um die Bohrung (10b, 12d, 11b) ausgebildet ist, die der Durchgangsbohrung (Hw) entspricht.

3. Stahllaminatdichtung nach Anspruch 2, worin die genannte erste Abdichteinrichtung ferner eine erste Sicke (10c) umfaßt, die am ersten Blech (10) zwischen der zweiten Sicke (12a) und dem gekrümmten Abschnitt (12b) des zweiten Blechs (12) zum Umgeben der Bohrung (10a) ausgebildet ist.

4. Stahllaminatdichtung nach jedem vorangehenden Anspruch, worin die genannten abdichtenden Schichten (13), die am dritten Blech (11) ausgebildet sind, aus weichen Materialien hergestellt sind, um Strömungsmittel daran zu hindern, zwischen den Blechen hindurchzutreten.

5. Stahllaminatdichtung nach jedem vorangehenden Anspruch, worin die zweite Abdichteinrichtung eine dritte Sicke (11c) umfaßt, die am dritten Blech (11) zum Umgeben der Durchgangsbohrung (Hw) des Motors ausgebildet ist.

6. Stahllaminatdichtung nach jedem vorangehenden Anspruch, worin die zweite Abdichteinrichtung eine vierte Sicke (10d) umfaßt, die am ersten Blech (10) rund um die Bohrung (10b) ausgebildet ist, die der Durchgangsbohrung (Hw) entspricht, sowie eine fünfte Sicke (12e), die am zweiten Blech (12) rund um die Bohrung (12d) ausgebildet ist, die der Durchgangsbohrung (Hw) entspricht, wobei sich die vierte und fünfte Sicke jeweils zum dritten Blech (11) hin erstreckt.

## Revendications

1. Joint stratifié en acier pour un moteur à combustion interne, ayant au moins un trou de cylindre (Hc) et au moins un trou traversant (Hw), ledit joint comprenant une première plaque (10), une deuxième plaque (12) située sous la première plaque et au moins une troisième plaque (11) située entre les première et deuxième plaques ;
lesdites première et deuxième plaques (10, 12) ayant chacune un trou (10a) correspondant au trou de cylindre (Hc), lesdites première, deuxième et troisième plaques (10, 12, 11) ayant chacune au moins un trou (10b, 12d, 11b) correspondant au trou traversant (Hw) ;
ledit joint comprenant encore des premiers moyens d'étanchéité formés sur au moins l'une des première et deuxième plaques pour former un joint étanche autour du trou de cylindre (Hc) du moteur et des deuxièmes moyens d'étanchéité formés sur au moins une des première, deuxième et troisième plaques pour établir un joint étanche autour du trou traversant (Hw) ; et
ladite troisième plaque (11) comprenant au moins un trou (11a) ayant un diamètre supérieur au diamètre des premiers moyens d'étanchéité, de sorte que les premiers moyens d'étanchéité sont situés à l'intérieur du trou (11a) de la troisième plaque lorsque le joint est assemblé ;
ledit joint étant caractérisé en ce que :
ladite troisième plaque (11) comprend des couches de matière d'étanchéité (13) formées sur les deux faces de la troisième plaque ;
lesdits premiers moyens d'étanchéité comprennent un premier bourrelet (10c) formé sur la première plaque (10) à proximité et autour du trou (10a) correspondant au trou de cylindre (Hc), et un deuxième bourrelet (12a) formé sur la deuxième plaque (12) à proximité et autour du trou qui correspond au trou du cylindre (Hc), ledit deuxième bourrelet (12a) et le premier bourrelet (10c) se faisant face et butant l'un contre l'autre ; et
lesdits deuxièmes moyens d'étanchéité comprennent au moins un bourrelet (10d, 12e, 11c) formé sur au moins une des première, deuxième et troisième plaques (10, 12, 11) autour du trou (10b, 12d, 11b) correspondant au trou traversant (Hw).

2. Joint stratifié en acier pour un moteur à combustion interne ayant au moins un trou de cylindre (Hc) et au moins un trou traversant (Hw), ledit joint comprenant une première plaque (10), une deuxième plaque (12) située sous la première plaque et au moins une troisième plaque (11) située entre les première et deuxième plaques ;
lesdites première et deuxième plaques (10, 12) ayant chacune au moins un trou (10a) correspondant au trou (Hc) du cylindre, lesdites première, deuxième et troisième plaques (10, 12, 11) ayant chacune au moins un trou (10b, 12d, 11b) correspondant au trou traversant (Hw) ;
ledit joint comprenant encore des premiers moyens d'étanchéité formés sur au moins l'une des première et deuxième plaques pour former un joint étanche autour du trou de cylindre (Hc) du moteur et des deuxièmes moyens d'étanchéité formés sur au moins une des première, deuxième et troisième plaques pour former un joint étanche autour du trou traversant (Hw) ; et
ladite troisième plaque (11) comprenant au moins un trou (11a) ayant un diamètre supérieur au diamètre des premiers moyens d'étanchéité, de manière que les premiers moyens d'étanchéité soient situés à l'intérieur du trou (11a) de la troisième plaque lorsque le joint est assemblé ;
ledit joint étant caractérisé en ce que :
ladite troisième plaque (11) comprend des couches d'étanchéité (13) formées sur les deux faces de la troisième plaque ;
lesdits premiers moyens d'étanchéité comprennent un deuxième bourrelet (12a) formé sur la deuxième plaque (12) à proximité et autour du trou correspondant au trou de cylindre (Hc), une partie recourbée (12b) formée sur la deuxième plaque (12) pour définir le trou correspondant au trou de cylindre (Hc), et une aile (12c) formée sur la deuxième plaque (12) pour s'étendre à partir de la portion recourbée (12b) dans le sens qui s'éloigne du trou de cylindre (Hc), ladite aile (12c) recouvrant la première plaque (10) et le deuxième bourrelet (12a) ; et
lesdits deuxièmes moyens d'étanchéité comprennent au moins un bourrelet (10d, 12e, 11c) formé sur au moins l'une des première, deuxième et troisième plaques (10, 12, 11) autour du trou (10b, 12d, 11b) correspondant au trou traversant (Hw).

3. Joint stratifié en acier selon la revendication 2, dans lequel les premiers moyens d'étanchéité comprennent en outre un premier bourrelet (10c) formé sur la première plaque (10) entre le deuxième bourrelet (12a) et la partie recourbée (12b) de la deuxième plaque (12) pour entourer le trou (10a).

4. Joint stratifié en acier selon une quelconque des revendications précédentes, dans lequel lesdites couches d'étanchéité (13) formées sur la troisième plaque (11) sont faites de matière tendre pour empêcher le fluide de passer entre les plaques.

5. Joint stratifié en acier selon une quelconque des revendications précédentes, dans lequel lesdits deuxièmes moyens d'étanchéité comprennent un troisième bourrelet (11c) formé sur la troisième plaque (11) pour entourer le trou traversant (Hw) du moteur.

6. Joint stratifié en acier selon une quelconque des revendications précédentes, dans lequel les deuxièmes moyens d'étanchéité comprennent un quatrième bourrelet (10d), formé sur la deuxième plaque (10) autour du trou (10b) correspondant au trou traversant (Hw) et un cinquième bourrelet (12e) formé sur la deuxième plaque (12) autour du trou (12d) qui correspond au trou traversant (Hw), le quatrième et cinquième bourrelets s'étendant chacun vers la troisième plaque (11).
